# EUROPEAN PATENT SPECIFICATION

(11) **EP 4 092 272 B1**
(45) Date of publication and mention of the grant of the patent: **17.12.2025**
(21) Application number: 21781414.4
(22) Date of filing: 01.04.2021
(51) Int. Cl.: F04C 29/00, F04B 39/00, F04C 29/06, H02K 5/167, H02K 7/14

(54) **COMPRESSOR**
VERDICHTER
COMPRESSEUR

(30) Priority: 01.04.2020 JP 2020065862
(43) Date of publication of application: 23.11.2022
(73) Proprietor: Mitsubishi Heavy Industries Thermal Systems, Ltd., Tokyo, 100-8332 (JP)
(72) Inventor: YAMASHITA Takuma, Tokyo 100-8332 (JP); OKADA Yoshiyuki, Tokyo 100-8332 (JP); OGAWA Makoto, Tokyo 100-8332 (JP); SASAKI Mikito, Tokyo 100-8332 (JP); NII Masahiro, Tokyo 100-8332 (JP); KOBA Risako, Tokyo 100-8332 (JP)
(74) Representative: Studio Torta S.p.A.
(86) International application number: PCT/JP2021/014172
(87) International publication number: WO 2021/201232

(56) References cited:
- JP-A- 2002 188 569
- JP-A- 2007 049 842
- JP-A- 2007 270 696
- JP-A- 2007 330 092
- JP-A- 2010 051 075
- JP-A- 2011 137 376
- JP-A- 2011 250 537

## Description

### Technical Field

The present disclosure relates to a compressor.

### Background Art

A compressor has a housing that defines a hollow portion extending in one direction (a height direction of the compressor), a compressor body that compresses a refrigerant and generates the compressed refrigerant, a shaft that extends in the same direction (the height direction of the compressor) as the housing and rotationally drives the compressor body, a motor that rotates the shaft, and a bearing portion that rotatably supports the shaft. The compressor body, the shaft, the motor, and the bearing portion are accommodated in the housing.

The motor and the compressor body are disposed in a direction in which the shaft extends (the height direction of the compressor).

The motor has the motor stator and the motor rotor. For example, a radial gap motor and an axial gap motor (see JP2006-283695) are used as the motor.

JP2006-283695 discloses a compressor in which a motor rotor configuring a motor is disposed above a compression portion (compressor body) and a motor stator configuring the motor above the motor rotor is disposed.

In addition, JP2006-283695 discloses that a space is provided between the compression portion and the motor rotor.

JP 2010 051075 A discloses an axial gap rotating electric machine that is rotatably arranged around a rotating shaft and includes: a rotor having a magnetic pole face around the rotating shaft; a first stator arranged on one side of the rotor in the direction of the rotating shaft with a gap; and a second stator arranged on the other side with a gap. The first stator includes: a substantially disk-shaped first magnetic core; a plurality of winding core magnetic cores; a first coil; and a first core cut part. The second stator includes a second magnetic core and a second core cut part. The first core cut part is located so that the first core cut part may not overlap the second core cut part in the direction of the rotating shaft.

JP 2011 250537 A discloses an axial gap motor wherein an opening is formed at a position facing an air gap between a stator and a rotor.

### Summary of Invention

### Technical Problem

In a case where the radial gap motor is used as the motor, a coil end configuring the motor stator is disposed in the direction in which the shaft extends (the height direction of the compressor). For this reason, it is necessary to secure a space between the compressor body and the motor, and there is a possibility that the height of the compressor is high.

In addition, in the compressor including the axial gap motor disclosed in PTL 1, since the space between the compression portion and the motor rotor is provided, there is a possibility that the height of the compressor is high.

The present disclosure is devised in order to solve the problem, and an object thereof is to provide a compressor of which a height can be lowered.

### Solution to Problem

According to an aspect of the present disclosure, in order to solve the problem, there is provided a compressor including a housing that extends in an axial direction, a compressor body that is accommodated in a lower portion of the housing and generates a compressed refrigerant by compressing a refrigerant, a shaft that extends in the axial direction, penetrates the compressor body, is disposed from the lower portion of the housing to an upper portion of the housing, and rotationally drives the compressor body, a bearing portion that is disposed on an upper surface of the compressor body and rotatably supports the shaft, and a motor that is positioned above the bearing portion, is provided in the housing, and has a motor stator which surrounds an outer peripheral surface of an upper portion of the shaft and a motor rotor which is disposed on an upper surface side of the motor stator. A lower surface of the motor stator and an upper surface of the bearing portion are brought into contact with each other in the axial direction, wherein the formation of a space between the motor stator and the bearing portion (18) is suppressed, and a flow channel space that extends in the axial direction and in which the compressed refrigerant flows is formed between the shaft and the motor stator.

### Advantageous Effects of Invention

In the compressor of the present disclosure, the height of the compressor can be lowered.

### Brief Description of Drawings

Fig. 1 is a cross-sectional view schematically showing a compressor according to a first embodiment of the present disclosure.
Fig. 2 is a cross-sectional view of the compressor shown in Fig. 1, which is taken along an A₁-A₂ line direction.
Fig. 3 is a cross-sectional view schematically showing a compressor according to a second embodiment of the present disclosure.

### Description of Embodiments

### [First Embodiment]

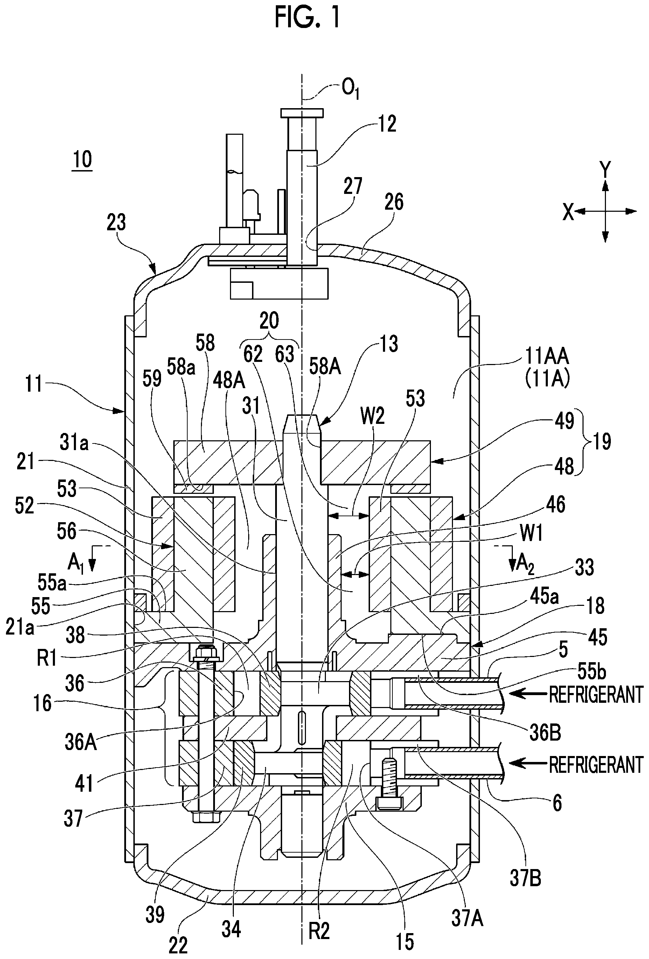

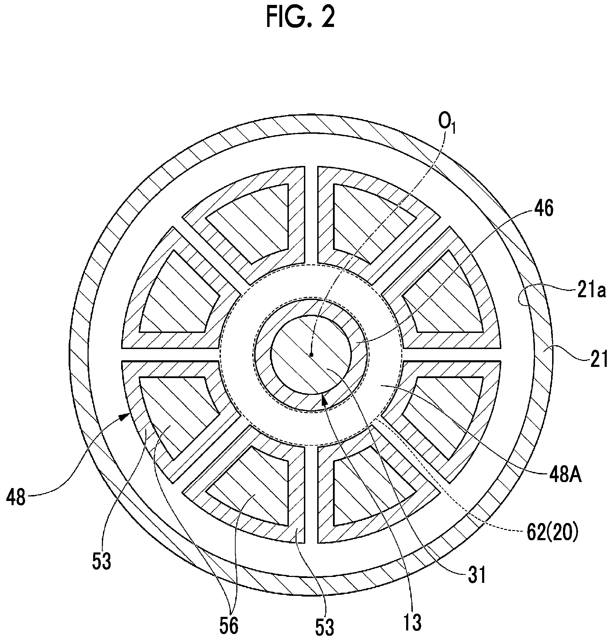

A compressor 10 of a first embodiment will be described with reference to Figs. 1 and 2. Fig. 1 shows a rotary compressor as an example of the compressor 10. For convenience of description, Fig. 1 also shows suction pipes 5 and 6 which are not components of the compressor 10. Fig. 2 is a cross-sectional view of the compressor 10 shown in Fig. 1, which is taken along an A₁-A₂ line direction.

In Fig. 1, O₁ indicates an axis (hereinafter referred to as an "axis O₁") of a shaft 13, X indicates a radial direction (hereinafter referred to as a "radial direction X") of the shaft 13, and a Y-direction indicates an axial direction (hereinafter referred to as an "axial direction Y"), which is a direction (a height direction of the compressor 10) in which the axis O₁ extends.

In addition, in Fig. 1, W1 indicates a width (hereinafter, referred to as a "width W1") of a lower space 62 in the radial direction, and W2 indicates a width (hereinafter, referred to as a "width W2") of an upper space 63 in the radial direction.

In Figs. 1 and 2, the same components will be assigned with the same reference signs.

### (Overall Configuration of Compressor)

The compressor 10 includes a housing 11, a discharge pipe 12, the shaft 13, a lower bearing portion 15, a compressor body 16, an upper bearing portion 18 (bearing portion), a motor 19, and a flow channel space 20.

### (Configuration of Housing)

The housing 11 is a closed type housing and extends in the axial direction Y. The housing 11 defines an internal space 11A extending in the axial direction Y.

The housing 11 has a tubular portion 21, a bottom portion 22, and a lid portion 23. The tubular portion 21 is a cylindrical member of which both ends (an upper end and a lower end) disposed in the axial direction Y are open ends.

The bottom portion 22 is connected to the tubular portion 21 in a state where a part thereof is inserted into a lower end side of the tubular portion 21. Accordingly, the bottom portion 22 closes the open end of the tubular portion 21 disposed on the lower end side. The bottom portion 22 protrudes downward from the lower end of the tubular portion 21.

The lid portion 23 has a lid portion body 26 and a penetrating portion 27.

The lid portion body 26 is connected to the tubular portion 21 in a state where a part thereof is inserted into an upper end side of the tubular portion 21. Accordingly, the lid portion body 26 closes the upper end of the tubular portion 21. The lid portion body 26 protrudes upward from the upper end of the tubular portion 21.

The penetrating portion 27 is formed in the lid portion body 26 and penetrates the lid portion body 26 in the axial direction Y. The penetrating portion 27 has an axis formed at a position matching the axis O₁ of the shaft 13.

### (Configuration of Discharge Pipe)

The discharge pipe 12 is inserted into the penetrating portion 27. The discharge pipe 12 is brazed to the lid portion body 26 with a brazing material. The discharge pipe 12 communicates with a discharge space 11AA disposed on a lid portion 23 side in an internal space A.

A compressed refrigerant that is generated by the compressor body 16 and is introduced into the discharge space 11AA is discharged from the discharge pipe 12 to the outside (where the compressed refrigerant is to be used) of the compressor 10.

### (Configuration of Shaft)

The shaft 13 is accommodated in the housing 11 and has a shaft body 31 and eccentric shaft portions 33 and 34.

The shaft body 31 extends in the axial direction Y and is disposed from a lower portion to an upper portion of the housing 11. The shaft body 31 has an axis disposed at a position matching the axis O₁. The shaft body 31 penetrates the lower bearing portion 15, the compressor body 16, and the upper bearing portion 18 in the axial direction Y.

The eccentric shaft portions 33 and 34 are provided at a lower portion of the shaft body 31. The eccentric shaft portion 34 is disposed below a position where the eccentric shaft portion 33 is provided. The eccentric shaft portions 33 and 34 are accommodated in the compressor body 16. The eccentric shaft portions 33 and 34 are disposed at positions offset from the axis O₁ of the shaft body 31.

As the shaft 13 having the above configuration is rotated, the compressor body 16 is rotationally driven.

### (Configuration of Lower Bearing Portion)

The lower bearing portion 15 is disposed to surround a lower end portion of the shaft body 31. The lower bearing portion 15 supports the shaft body 31 in a rotatable state. The lower bearing portion 15 is fixed to the compressor body 16 by a bolt.

### (Configuration of Compressor Body)

The compressor body 16 is provided in the internal space 11A positioned at the lower portion of the housing 11. The compressor body 16 is disposed on the lower bearing portion 15. Accordingly, a lower end surface of the compressor body 16 is in contact with an upper surface of the lower bearing portion 15.

The compressor body 16 is a twin rotary type and has disk-shaped cylinders 36 and 37, cylindrical piston rotors 38 and 39, a blade (not shown), and a separator 41.

The cylinders 36 and 37 are disposed at an interval in the axial direction Y. The cylinder 37 is disposed below the cylinder 36.

A cylindrical cylinder inner wall surface 36A having an axis in the axial direction Y is formed at a center portion of the cylinder 36. The cylindrical piston rotor 38 having an outer diameter smaller than an inner diameter of the cylinder inner wall surface 36A is disposed inside the cylinder 36. A suction port 36B into which a gas phase refrigerant in an accumulator (not shown) is introduced is formed in the cylinder 36. The suction pipe 5 through which the gas phase refrigerant is supplied into the compressor body 16 is connected to the suction port 36B.

A cylindrical cylinder inner wall surface 37A having an axis in the axial direction Y is formed at a center portion of the cylinder 37. The cylindrical piston rotor 39 having an outer diameter smaller than an inner diameter of the cylinder inner wall surface 37A is disposed inside the cylinder 37. A suction port 37B into which the gas phase refrigerant in the accumulator (not shown) is introduced is formed in the cylinder 37. The suction pipe 6 through which the gas phase refrigerant is supplied into the compressor body 16 is connected to the suction port 37B.

The piston rotor 39 is fixed in a state where the eccentric shaft portion 34 of the shaft 13 along the axis O₁ is inserted. Accordingly, a compression chamber R2 having a crescent-shaped cross-section is formed between the cylinder inner wall surface 37A and an outer peripheral surface of the piston rotor 39. The gas phase refrigerant is introduced into the compression chamber R2 via the suction port 37B, and the gas phase refrigerant is compressed.

Outer diameters of the eccentric shaft portions 33 and 34 are configured to be slightly smaller than inner diameters of the piston rotors 38 and 39. Accordingly, when the shaft 13 rotates, the eccentric shaft portions 33 and 34 turn around the axis O₁ of the shaft 13, and the piston rotors 38 and 39 eccentrically roll in the cylinders 36 and 37.

At this time, since first and second blades are pressed by a coil spring, a tip portion advances and retracts, following movements of the piston rotors 38 and 39, and is pressed against the piston rotors 38 and 39 at all times.

The separator 41 is provided between the cylinder 36 and the cylinder 37. The cylinder 36 is provided with the first blade (not shown) dividing a compression chamber R1 into two parts. The first blade is held by an insertion groove (not shown) that is formed to extend in a radial direction of the cylinder 36.

The first blade is configured to be capable of advancing and retracting in a direction of approaching and separating with respect to the piston rotor 38. The first blade is pressed by the coil spring (not shown). A discharge hole (not shown) through which the compressed refrigerant is discharged is formed at a predetermined position of the cylinder 36. In addition, a lead valve (not shown) is provided in the discharge hole.

The cylinder 37 is provided with the second blade (not shown) dividing the compression chamber R2 into two parts. The second blade is held by an insertion groove (not shown) that is formed to extend in a radial direction of the cylinder 37.

The second blade is configured to be capable of advancing and retracting in a direction of approaching and separating with respect to the piston rotor 39. The second blade is pressed by the coil spring (not shown). A discharge hole (not shown) through which the compressed refrigerant is discharged is formed at a predetermined position of the cylinder 37. In addition, a lead valve (not shown) is provided in the discharge hole.

In the compressor body 16 having the above configuration, when the gas phase refrigerant is introduced into the compression chambers R1 and R2, volumes of the compression chambers R1 and R2 gradually decrease, the gas phase refrigerant is compressed, and a compressed refrigerant is generated due to eccentric rolling of the piston rotors 38 and 39.

Then, when the pressure of the compressed refrigerant increases, the lead valve (not shown) is pressed and opened, and the compressed refrigerant is discharged to the outside of the cylinder.

The compressor body 16 having the above configuration is fixed to the upper bearing portion 18 by a bolt.

### (Configuration of Upper Bearing Portion)

The upper bearing portion 18 is provided on the compressor body 16. The upper bearing portion 18 is disposed to surround an outer peripheral surface of the shaft body 31. The upper bearing portion 18 supports the shaft body 31 in a rotatable state.

The upper bearing portion 18 has a plate-shaped portion 45 and a protrusion portion 46.

The plate-shaped portion 45 is disposed on an upper surface of the compressor body 16 and extends in the radial direction of the shaft 13. An outer peripheral portion of the plate-shaped portion 45 is fixed to an inner peripheral surface 21a of the tubular portion 21.

The protrusion portion 46 is disposed on an upper surface side of the plate-shaped portion 45. The protrusion portion 46 extends above the plate-shaped portion 45 along an outer peripheral surface 31a of the shaft body 31. The outer diameter of the protrusion portion 46 is smaller than the outer diameter of the plate-shaped portion 45. The protrusion portion 46 is configured integrally with the plate-shaped portion 45. The protrusion portion 46 is disposed inside the motor 19 in a state separated from the motor 19.

### (Overall Configuration of Motor)

The motor 19 is disposed above the upper bearing portion 18. The discharge space 11AA, which is a part of the internal space 11A, is disposed between the motor 19 and the lid portion 23.

The motor 19 has a motor stator 48 and a motor rotor 49.

### (Configuration of Motor Stator)

The motor stator 48 is positioned above the upper bearing portion 18 and is provided at the tubular portion 21. The motor stator 48 is disposed outside the shaft body 31 and the protrusion portion 46 such that the flow channel space 20 extending in the axial direction Y is defined between the shaft body 31 and the upper bearing portion 18.

The motor stator 48 is disposed to surround the outer peripheral surface 31a, which is an upper portion of the shaft body 31. The motor stator 48 has a core 52 and a plurality of coils 53. The core 52 has a plate portion 55 and a plurality of protrusion portions 56.

The plate portion 55 has a ring shape and is fixed to the inner peripheral surface 21a of the tubular portion 21. The plate portion 55 has an upper surface 55a disposed on the lid portion 23 side and a lower surface 55b disposed on a bottom portion 22 side.

The plurality of protrusion portions 56 are provided on the upper surface 55a of the plate portion 55 at intervals in a circumferential direction. The plurality of protrusion portions 56 protrude upward from the upper surface 55a of the plate portion 55. The plurality of protrusion portions 56 are disposed to surround the shaft body 31 and the protrusion portion 46.

It is possible to use, for example, iron as a material for the core 52 having the above configuration.

The coils 53 are provided with respect to the plurality of protrusion portions 56, respectively. Accordingly, the plurality of coils 53 are disposed to surround the shaft body 31 and the protrusion portion 46.

The lower surface 55b (a lower surface of the motor stator 48) of the plate portion 55 of the motor stator 48 having the configuration is in contact with an upper surface 45a (an upper surface of the upper bearing portion 18) of the plate-shaped portion 45 of the upper bearing portion 18.

### (Effect of Bringing Lower Surface of Motor Stator and Upper Surface of Upper Bearing Portion into Contact with Each Other)

As described above, by bringing the lower surface 55b of the plate portion 55 of the motor stator 48 and the upper surface 45a of the plate-shaped portion 45 of the upper bearing portion 18 into contact with each other, the formation of a space between the motor stator 48 and the upper bearing portion 18 is suppressed. Thus, it is possible to lower the height of a region where a structure formed by the motor stator 48 and the upper bearing portion 18 is disposed.

Accordingly, since it is possible to lower the height of the housing 11 where the motor stator 48 and the upper bearing portion 18 are accommodated, the height of the compressor 10 can be lowered.

### (Overall Configuration of Motor Rotor)

The motor rotor 49 is disposed above the motor stator 48 via a gap.

The motor rotor 49 has a motor rotor body 58, an insertion hole 58A, and a plurality of magnets 59.

### (Configurations of Motor Rotor Body, Insertion Hole, and Through-Hole)

The motor rotor body 58 is a circular plate member. The outer diameter of the motor rotor body 58 is smaller than the inner diameter of the tubular portion 21.

The insertion hole 58A is formed at a center portion of the motor rotor body 58. The insertion hole 58A penetrates the motor rotor body 58 in a thickness direction (axial direction Y). The insertion hole 58A is inserted into a tip portion of the shaft body 31. The motor rotor body 58 is fixed to the tip portion of the shaft body 31.

### (Configuration of Plurality of Magnets)

The plurality of magnets 59 are provided on a lower surface 58a of the motor rotor body 58. The plurality of magnets 59 are disposed in the circumferential direction to face upper end surfaces of the protrusion portions 56 in the axial direction Y.

### (Configuration of Flow Channel Space)

The flow channel space 20 is a tubular space that is surrounded by the shaft body 31, the upper bearing portion 18, the motor stator 48, and the motor rotor 49 and extends in the axial direction Y. The flow channel space 20 is a space through which the compressed refrigerant generated by the compressor body 16 is introduced upward.

The flow channel space 20 has the lower space 62 and the upper space 63.

The lower space 62 is a space of which a radial direction is defined by the motor stator 48 and the protrusion portion 46.

The upper space 63 is a space disposed above the lower space 62 and is configured integrally with the lower space 62. The upper space 63 is a space of which a radial direction is defined by the shaft body 31 positioned above the protrusion portion 46 and the protrusion portion 46.

The width W1 of the lower space 62 is configured to be narrower than the width W2 of the upper space 63.

### (Effect of Flow Channel Space)

As described above, by forming the flow channel space 20 extending in the axial direction Y between the shaft body 31 and the upper bearing portion 18, and the motor stator 48, a muffler effect with respect to the compressed refrigerant flowing in the flow channel space 20 can be demonstrated.

In addition, since it is possible to contract and expand the compressed refrigerant in the flow channel space 20 by configuring the width W1 of the lower space 62 to be narrower than the width W2 of the upper space 63, the muffler effect can be enhanced.

### (Effect of Compressor of First Embodiment)

In the compressor 10 of the first embodiment, by bringing the lower surface 55b of the motor stator 48 and the upper surface 45a of the upper bearing portion 18 into contact with each other, the formation of the space between the motor stator 48 and the upper bearing portion 18 is suppressed. Thus, it is possible to lower the height of the region where the structure formed by the motor stator 48 and the upper bearing portion 18 is disposed. Accordingly, since it is possible to lower the height of the housing 11 where the motor stator 48 and the upper bearing portion 18 are accommodated, the height of the compressor 10 can be lowered.

In addition, by forming the flow channel space 20 extending in the axial direction Y between the shaft 13 and the motor stator 48, a muffler effect with respect to a compressed refrigerant flowing in the flow channel space 20 can be demonstrated.

In the first embodiment, for example, a through-hole that penetrates the motor rotor 49 in the axial direction Y and causes the flow channel space 20 and the discharge space 11AA to communicate with each other may be formed. The plurality of through-holes may be disposed in the circumferential direction. A compressed refrigerant moving above the flow channel space 20 is introduced through the through-holes into the discharge space 11AA.

### (Effect of Providing Through-Hole)

By forming the through-holes configured as described above, a compressed refrigerant flowing in the flow channel space 20 extending in the axial direction Y can flow in the axial direction Y and can be introduced into the discharge space 11AA.

The opening diameter of the through-hole may be, for example, smaller than the width W2 of the upper space 63.

### (Effect of Making Opening Diameter of Through-Hole Smaller Than Width of Upper Space)

As described above, by making the opening diameter of the through-hole smaller than the width W2 of the upper space 63, the muffler effect can be further enhanced.

### [Second Embodiment]

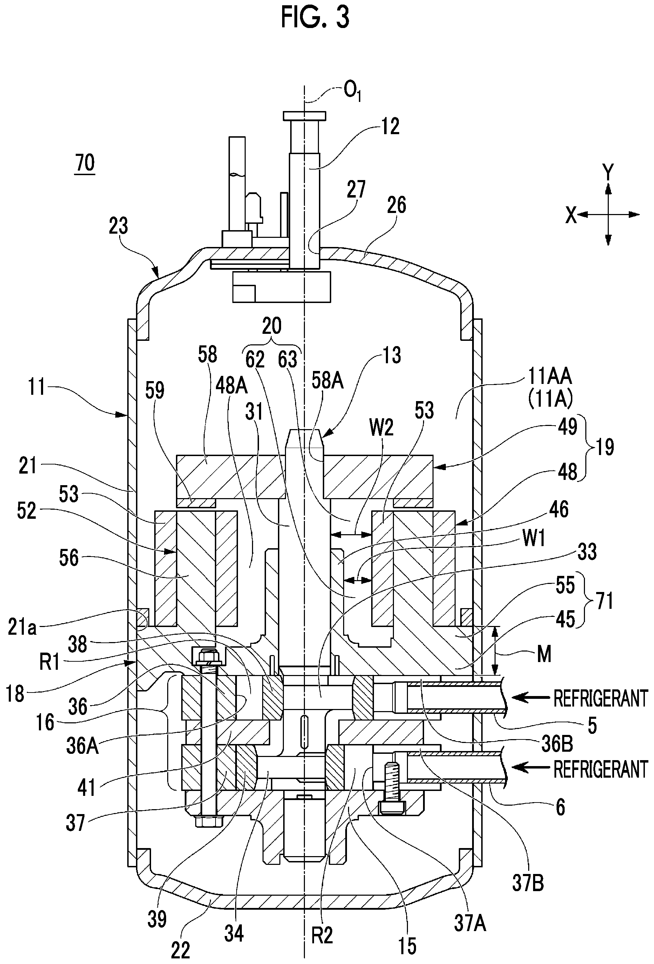

A compressor 70 of a second embodiment will be described with reference to Fig. 3. In Fig. 3, the same components as the structure shown in Fig. 1 will be assigned with the same reference signs.

### (Configuration of Compressor)

The compressor 70 is configured integrally with the plate portion 55 and the plate-shaped portion 45 which are described in the first embodiment, and a thickness M of a structure 71 formed by the plate portion 55 and the plate-shaped portion 45, which are integrated with each other, in the axial direction Y is configured the same as the compressor 10 except for being smaller than the total thickness of the plate portion 55 and the plate-shaped portion 45, which are separated from each other as shown in Fig. 1, in the axial direction Y.

### (Effect of Compressor)

In the compressor 70 of the second embodiment, it is possible to lower the height of the housing 11 by integrating the plate portion 55 and the plate-shaped portion 45 with each other and making the total thickness M of the plate portion 55 and the plate-shaped portion 45, which are integrated with each other, in the axial direction Y smaller than the total thickness of the plate portion 55 and the plate-shaped portion 45, which are separated from each other. Accordingly, the height of the compressor 70 can be lowered.

Although the preferable embodiments of the present disclosure have been described in detail hereinbefore, the present disclosure is not limited to such specific embodiments, and can be subjected to various modifications and changes within the invention as claimed in the appended set of claims.

### [Appendix]

The compressors 10 and 70 described in each of the embodiments are understood, for example, as follows.
(1) The compressors 10 and 70 according to a first aspect includes the housing 11 that extends in the axial direction Y, the compressor body 16 that is accommodated in the lower portion of the housing 11 and generates a compressed refrigerant by compressing a refrigerant, the shaft 13 that extends in the axial direction Y, penetrates the compressor body 16, is disposed from the lower portion of the housing 11 to the upper portion of the housing 11, and rotationally drives the compressor body 16, the bearing portion (upper bearing portion 18) that is disposed on the upper surface of the compressor body 16 and rotatably supports the shaft 13, the motor stator 48 that is positioned above the bearing portion (upper bearing portion 18), is provided in the housing 11, and surrounds the outer peripheral surface of the upper portion of the shaft 13, and the motor 19 that has the motor rotor 49 disposed on an upper surface side of the motor stator 48. The lower surface 55b of the motor stator 48 and the upper surface 45a of the bearing portion (upper bearing portion 18) are brought into contact with each other in the axial direction Y, and the flow channel space 20 that extends in the axial direction Y and in which the compressed refrigerant flows is formed between the shaft 13 and the motor stator 48.

As described above, by bringing the lower surface 55b of the motor stator 48 and the upper surface 45a of the bearing portion (upper bearing portion 18) into contact with each other, the formation of the space between the motor stator 48 and the bearing portion (upper bearing portion 18) is suppressed. Thus, it is possible to lower the height of the region where the structure formed by the motor stator 48 and the bearing portion (upper bearing portion 18) is disposed. Accordingly, since it is possible to lower the height of the housing 11 where the motor stator 48 and the bearing portion (upper bearing portion 18) are accommodated, the height of the compressor 10 can be lowered.

In addition, by forming the flow channel space 20 extending in the axial direction Y between the shaft 13 and the motor stator 48, a muffler effect with respect to a compressed refrigerant flowing in the flow channel space 20 can be demonstrated.

(2) The compressors 10 and 70 according to a second aspect may be the compressors 10 and 70 of (1). The bearing portion (upper bearing portion 18) may have the plate-shaped portion 45 that is disposed on the upper surface of the compressor body 16 and extends in the radial direction of the shaft 13 and the protrusion portions 56 that extend upward along the outer peripheral surface of the shaft 13 from the plate-shaped portion and face the lower portion of the motor stator 48 in the radial direction of the shaft 13. The flow channel space 20 may include the lower space that is formed between the protrusion portions 56 and the lower portion of the motor stator 48 and the upper space 63 that is formed between the shaft 13, which is positioned between the protrusion portions 56 and the motor rotor 49, and the upper portion of the motor stator 48 and communicates with the lower space 62. The width W1 of the lower space 62 may be narrower than the width W2 of the upper space 63 in the radial direction.

As described above, since it is possible to contract and expand a compressed refrigerant flowing in the flow channel space 20 by making the width W1 of the lower space 62 configuring the flow channel space 20 to be narrower than the width W2 of the upper space 63, the muffler effect can be enhanced.

(3) The compressors 10 and 70 according to a third aspect may be the compressors 10 and 70 of (2). The discharge space 11AA that is defined above the motor rotor 49 by the motor rotor 49 and the housing 11 and into which a compressed refrigerant is introduced may be defined. The discharge pipe 12 through which the compressed refrigerant flowed in the discharge space 11AA is discharged to the outside may be provided in the housing 11. The through-hole that penetrates the motor rotor 49 in the axial direction Y and causes the flow channel space 20 and the discharge space 11AA to communicate with each other may be formed in the motor rotor 49.

By forming the through-hole configured as described above, a compressed refrigerant flowing in the flow channel space 20 extending in the axial direction Y can be moved in the axial direction Y and can be introduced into the discharge space 11AA.

(4) The compressors 10 and 70 according to a fourth aspect may be the compressors 10 and 70 of (3). The opening diameter of the through-hole may be smaller than the width W2 of the upper space 63 in the radial direction.

As described above, by making the opening diameter of the through-hole smaller than the width W2 of the upper space 63 in the radial direction, the muffler effect can be further enhanced.

(5) The compressor 70 according to a fifth aspect may be the compressor 70 according to any one of (2) to (4). The motor stator 48 may have the core 52 that has the plate portion 55, which has a ring shape and is fixed to the inner peripheral surface 21a of the housing 11, and the plurality of protrusion portions 56, which are provided on the upper surface of the plate portion 55 at intervals in the circumferential direction and protrude above the plate portion 55, and the coils 53 that are provided at the plurality of protrusion portions 56 respectively. The plate portion 55 may be integrated with the plate-shaped portion 45 of the bearing portion (upper bearing portion 18). The total thickness M of the plate portion 55 and the plate-shaped portion 45 which are integrated with each other may be smaller than the total thickness of the plate portion 55 and the plate-shaped portion 45 which are separated from each other, in the axial direction Y.

As described above, it is possible to lower the height of the housing 11 by integrating the plate portion 55 and the plate-shaped portion 45 with each other and making the total thickness M of the plate portion 55 and the plate-shaped portion 45, which are integrated with each other, in the axial direction Y smaller than the total thickness of the plate portion 55 and the plate-shaped portion 45, which are separated from each other. Accordingly, the height of the compressor 70 can be lowered.

(6) The compressors 10 and 70 according to a sixth aspect may be the compressors 10 and 70 according to any one of (1) to (5) and may use an axial gap motor as the motor 19.

As described above, the axial gap motor can be used as the motor 19.

### Industrial Applicability

In the compressor of the present disclosure, the height of the compressor can be lowered.

### Reference Signs List

5,6: Suction pipe
10,70: Compressor
11: Housing
11A: Internal space
11AA: Discharge space
12: Discharge pipe
13: Shaft
15: Lower bearing portion
16: Compressor body
18: Upper bearing portion
19: Motor
20: Flow channel space
21: Tubular portion
21a: Inner peripheral surface
22: Bottom portion
23: Lid portion
26: Lid portion body
27: Penetrating portion
31: Shaft body
31a: Outer peripheral surface
33,34: Eccentric shaft portion
36,37: Cylinder
36A,37A: Cylinder inner wall surface
36B,37B: Suction port
38,39: Piston rotor
41: Separator
45: Plate-shaped portion
45a,55a: Upper surface
46,56: Protrusion portion
48: Motor stator
49: Motor rotor
52: Core
53: Coil
55: Plate portion
55b,58a: Lower surface
58: Motor rotor body
58A: Insertion hole
59: Magnet
62: Lower space
63: Upper space
71: Structure
M: Thickness
O₁: Axis
R1,R2: Compression chamber
W1,W2: Width
X: Radial direction
Y: Axial direction

## Claims

1. A compressor (10, 70) comprising:
a housing (11) that extends in an axial direction (Y);
a compressor body (16) that is accommodated in a lower portion of the housing (11) and generates a compressed refrigerant by compressing a refrigerant;
a shaft (13) that extends in the axial direction (Y), penetrates the compressor body (16), is disposed from the lower portion of the housing (11) to an upper portion of the housing (11), and rotationally drives the compressor body (16);
a bearing portion (18) that is disposed on an upper surface of the compressor body (16) and rotatably supports the shaft (13); and
a motor (19) that is positioned above the bearing portion (18), is provided in the housing (11), and has a motor stator (48) which surrounds an outer peripheral surface of an upper portion of the shaft (13) and a motor rotor (49) which is disposed on an upper surface side of the motor stator (48),
wherein a flow channel space (20) that extends in the axial direction (Y) and in which the compressed refrigerant flows is formed between the shaft (13) and the motor stator (48),
**characterized in that**
a lower surface (55b) of the motor stator (48) and an upper surface (45a) of the bearing portion (18) are brought into contact with each other in the axial direction (Y), wherein the formation of a space between the motor stator (48) and the bearing portion (18) is suppressed.

2. The compressor according to claim 1,
wherein the bearing portion (18) has a plate-shaped portion (45) that is disposed on the upper surface of the compressor body (16) and extends in a radial direction (X) of the shaft (13) and a protrusion portion (46) that extends upward from the plate-shaped portion (45) along an outer peripheral surface of the shaft (13) and faces a lower portion of the motor stator (48) in the radial direction (X) of the shaft (13),
the flow channel space (20) includes a lower space (62) that is formed between the protrusion portion (46) and the lower portion of the motor stator (48) and an upper space (63) that is formed between the shaft (13), which is positioned between the protrusion portion (46) and the motor rotor (49), and an upper portion of the motor stator (48) and that communicates with the lower space (62), and
a width (W1) of the lower space (62) is narrower than a width (W2) of the upper space (63) in the radial direction (X).

3. The compressor according to claim 2,
wherein a discharge space (11AA) that is defined by the motor rotor (49) and the housing (11) and into which the compressed refrigerant is introduced is defined above the motor rotor (49),
a discharge pipe (12) through which the compressed refrigerant flowed into the discharge space (11AA) is discharged to an outside is provided in the housing (11), and
a through-hole that penetrates the motor rotor (49) in the axial direction (Y) and causes the flow channel space (20) and the discharge space (11AA) to communicate with each other is formed in the motor rotor (49).

4. The compressor according to claim 3,
wherein an opening diameter of the through-hole is smaller than the width (W2) of the upper space (63) in the radial direction (X).

5. The compressor according to any one of claims 2 to 4,
wherein the motor stator (48) has a core (52) that has a plate portion (55) which has a ring shape and is fixed to an inner peripheral surface of the housing (11) and a plurality of protrusion portions (56) which are provided on an upper surface of the plate portion (55) at an interval in a circumferential direction and protrude above the plate portion (55), and a coil (53) that is provided at each of the plurality of protrusion portions (56),
the plate portion (55) is integrated with the plate-shaped portion (45) of the bearing portion (18), and
a total thickness of the plate portion (55) and the plate-shaped portion (45) which are integrated with each other is smaller than a total thickness of the plate portion (55) and the plate-shaped portion (45) which are separated from each other, in the axial direction (Y).

6. The compressor according to any one of claims 1 to 5,
wherein the motor (19) is an axial gap motor.

## Patentansprüche

1. Kompressor (10, 70) umfassend:
ein Gehäuse (11), das sich in einer axialen Richtung (Y) erstreckt;
einen Kompressorkörper (16), der in einem unteren Abschnitt des Gehäuses (11) untergebracht ist und durch Verdichten eines Kältemittels ein verdichtetes Kältemittel erzeugt;
eine Welle (13), die sich in der axialen Richtung (Y) erstreckt, den Kompressorkörper (16) durchdringt, von dem unteren Abschnitt des Gehäuses (11) zu einem oberen Abschnitt des Gehäuses (11) angeordnet ist und den Kompressorkörper (16) rotationsmäßig antreibt;
einen Lagerabschnitt (18), der an einer oberen Fläche bzw. Oberfläche des Kompressorkörpers (16) angeordnet ist und die Welle (13) drehbar lagert; und
einen Motor (19), der oberhalb des Lagerabschnitts (18) positioniert ist, in dem Gehäuse (11) bereitgestellt ist und einen Motorstator (48), der eine Außenumfangsfläche bzw. -oberfläche eines oberen Abschnitts der Welle (13) umgibt, sowie einen Motorrotor (49) aufweist, der an einer oberen Flächen- bzw. Oberflächenseite des Motorstators (48) angeordnet ist,
wobei ein Strömungskanalraum (20), der sich in der axialen Richtung (Y) erstreckt und in dem das verdichtete Kältemittel strömt, zwischen der Welle (13) und dem Motorstator (48) gebildet ist,
**dadurch gekennzeichnet, dass**
eine untere Fläche bzw. Oberfläche (55b) des Motorstators (48) und eine obere Fläche bzw. Oberfläche (45a) des Lagerabschnitts (18) in der axialen Richtung (Y) miteinander in Kontakt gebracht werden, wobei die Bildung eines Raums zwischen dem Motorstator (48) und dem Lagerabschnitt (18) unterbunden wird.

2. Kompressor nach Anspruch 1,
wobei der Lagerabschnitt (18) einen plattenförmigen Abschnitt (45), der an der oberen Fläche des Kompressorkörpers (16) angeordnet ist und sich in einer radialen Richtung (X) der Welle (13) erstreckt, und einen Vorsprungsabschnitt (46) aufweist, der sich von dem plattenförmigen Abschnitt (45) entlang einer Außenumfangsfläche bzw. -oberfläche der Welle (13) nach oben erstreckt und einem unteren Abschnitt des Motorstators (48) in der radialen Richtung (X) der Welle (13) zugewandt ist,
der Strömungskanalraum (20) einen unteren Raum (62), der zwischen dem Vorsprungsabschnitt (46) und dem unteren Abschnitt des Motorstators (48) gebildet ist, und einen oberen Raum (63) enthält, der zwischen der Welle (13), die zwischen dem Vorsprungsabschnitt (46) und dem Motorrotor (49) positioniert ist, und einem oberen Abschnitt des Motorstators (48) gebildet ist und der mit dem unteren Raum (62) kommuniziert bzw. in Verbindung ist, und eine Breite (W1) des unteren Raums (62) schmaler ist als eine Breite (W2) des oberen Raums (63) in der radialen Richtung (X).

3. Kompressor nach Anspruch 2,
wobei ein Auslassraum (11AA), der durch den Motorrotor (49) und das Gehäuse (11) definiert ist und in den das verdichtete Kältemittel eingeleitet wird, oberhalb des Motorrotors (49) definiert ist,
ein Auslassrohr (12), durch das das in den Auslassraum (11AA) eingeströmte verdichtete Kältemittel nach außen abgeleitet wird, in dem Gehäuse (11) bereitgestellt ist, und
ein Durchgangsloch, das den Motorrotor (49) in der axialen Richtung (Y) durchdringt und den Strömungskanalraum (20) und den Auslassraum (11AA) veranlasst, miteinander zu kommunizieren bzw. in Verbindung zu sein, in dem Motorrotor (49) ausgebildet ist.

4. Kompressor nach Anspruch 3,
wobei ein Öffnungsdurchmesser des Durchgangslochs kleiner ist als die Breite (W2) des oberen Raums (63) in der radialen Richtung (X).

5. Kompressor nach einem der Ansprüche 2 bis 4,
wobei der Motorstator (48) einen Kern (52), der einen Plattenabschnitt (55), der eine Ringform aufweist und an einer Innenumfangsfläche bzw. -oberfläche des Gehäuses (11) befestigt ist, und eine Mehrzahl von Vorsprungsabschnitten (56) aufweist, die an einer oberen Fläche bzw. Oberfläche des Plattenabschnitts (55) in einem Abstand in einer Umfangsrichtung bereitgestellt sind und über den Plattenabschnitt (55) vorspringen, und eine Spule (53) aufweist, die an jedem der Mehrzahl von Vorsprungsabschnitten (56) bereitgestellt ist,
der Plattenabschnitt (55) mit dem plattenförmigen Abschnitt (45) des Lagerabschnitts (18) integriert ist, und
eine Gesamtdicke des Plattenabschnitts (55) und des plattenförmigen Abschnitts (45), die miteinander integriert sind, in der axialen Richtung (Y) kleiner ist als eine Gesamtdicke des Plattenabschnitts (55) und des plattenförmigen Abschnitts (45), die voneinander getrennt sind.

6. Kompressor nach einem der Ansprüche 1 bis 5,
wobei der Motor (19) ein Axialspaltmotor ist.

## Revendications

1. Compresseur (10, 70) comprenant :
un carter (11) qui s'étend dans une direction axiale (Y) ;
un corps de compresseur (16) qui est reçu dans une partie inférieure du carter (11) et génère un fluide frigorigène comprimé par la compression d'un fluide frigorigène ;
un arbre (13) qui s'étend dans la direction axiale (Y), pénètre dans le corps de compresseur (16), est disposé de la partie inférieure du carter (11) à une partie supérieure du carter (11) et entraîne en rotation le corps de compresseur (16) ;
une partie palier (18) qui est disposée sur une surface supérieure du corps de compresseur (16) et porte l'arbre (13) en rotation ; et
un moteur (19) qui est positionné au-dessus de la partie palier (18), est ménagé dans le carter (11), et possède un stator de moteur (48) qui encercle une surface périphérique externe d'une partie supérieure de l'arbre (13) et un rotor de moteur (49) qui est disposé sur un côté surface supérieure du stator de moteur (48),
dans lequel un espace de canal d'écoulement (20) qui s'étend dans la direction axiale (Y) et dans lequel le fluide frigorigène comprimé s'écoule est formé entre l'arbre (13) et le stator de moteur (48),
**caractérisé en ce que**
une surface inférieure (55b) du stator de moteur (48) et une surface supérieure (45a) de la partie palier (18) sont amenées en contact l'une avec l'autre dans la direction axiale (Y), dans lequel la formation d'un espace entre le stator de moteur (48) et la partie palier (18) est supprimée.

2. Compresseur selon la revendication 1,
dans lequel la partie palier (18) possède une partie en forme de plaque (45) qui est disposée sur la surface supérieure du corps de compresseur (16) et s'étend dans une direction radiale (X) de l'arbre (13) et une partie saillie (46) qui s'étend vers le haut à partir de la partie en forme de plaque (45) le long d'une surface périphérique externe de l'arbre (13) et fait face à une partie inférieure du stator de moteur (48) dans la direction radiale (X) de l'arbre (13),
l'espace de canal d'écoulement (20) comporte un espace inférieur (62) qui est formé entre la partie saillie (46) et la partie inférieure du stator de moteur (48) et un espace supérieur (63) qui est formé entre l'arbre (13), qui est positionné entre la partie saillie (46) et le rotor de moteur (49), et une partie supérieure du stator de moteur (48) et qui communique avec l'espace inférieur (62), et
une largeur (W1) de l'espace inférieur (62) est plus étroite qu'une largeur (W2) de l'espace supérieur (63) dans la direction radiale (X).

3. Compresseur selon la revendication 2,
dans lequel un espace d'évacuation (11AA) qui est défini par le rotor de moteur (49) et le carter (11) et dans lequel le fluide frigorigène comprimé est introduit est défini au-dessus du rotor de moteur (49),
un conduit d'évacuation (12), par lequel le fluide frigorigène comprimé qui s'est écoulé dans l'espace d'évacuation (11AA) est évacué vers l'extérieur, est ménagé dans le carter (11), et
un trou traversant qui pénètre dans le rotor de moteur (49) dans la direction axiale (Y) et amène l'espace de canal d'écoulement (20) et l'espace d'évacuation (11AA) à communiquer l'un avec l'autre est formé dans le rotor de moteur (49).

4. Compresseur selon la revendication 3,
dans lequel un diamètre d'ouverture du trou traversant est plus petit que la largeur (W2) de l'espace supérieur (63) dans la direction radiale (X).

5. Compresseur selon l'une quelconque des revendications 2 à 4,
dans lequel le stator de moteur (48) possède un noyau (52) qui possède une partie plaque (55) qui possède une forme annulaire et est fixée à une surface périphérique interne du carter (11) et une pluralité de parties saillie (56) qui sont ménagées sur une surface supérieure de la partie plaque (55) à un intervalle dans une direction circonférentielle et font saillie au-dessus de la partie plaque (55), et une bobine (53) qui est ménagée au niveau de chacune de la pluralité de parties saillie (56),
la partie plaque (55) est intégrée à la partie en forme de plaque (45) de la partie palier (18), et
une épaisseur totale de la partie plaque (55) et de la partie en forme de plaque (45) qui sont solidaires l'une de l'autre est inférieure à une épaisseur totale de la partie plaque (55) et de la partie en forme de plaque (45) qui sont séparées l'une de l'autre, dans la direction axiale (Y).

6. Compresseur selon l'une quelconque des revendications 1 à 5, dans lequel le moteur (19) est un moteur à espace axial.
